# EUROPEAN PATENT SPECIFICATION

(11) **EP 4 489 622 B1**
(45) Date of publication and mention of the grant of the patent: **22.10.2025**
(21) Application number: 23710296.7
(22) Date of filing: 07.03.2023
(51) Int. Cl.: A47J 31/06, A47J 31/36

(54) **BEVERAGE PREPARATION MACHINE**
GETRÄNKEZUBEREITUNGSMASCHINE
MACHINE DE PRÉPARATION DE BOISSON

(30) Priority: 07.03.2022 EP 22160592
(43) Date of publication of application: 15.01.2025
(73) Proprietor: Société des Produits Nestlé S.A., 1800 Vevey (CH)
(72) Inventor: TALON, Christian, 1134 Vufflens-le-Château (CH); BONACCI, Enzo, 1073 Savigny (CH); RICHI, Xavier, 1110 Morges (CH)
(74) Representative: Pasquino, Fabio
(86) International application number: PCT/EP2023/055793
(87) International publication number: WO 2023/170092

(56) References cited:
- EP-A1- 3 199 071
- EP-B1- 1 731 063
- EP-B1- 3 013 712
- CN-B- 1 640 349
- KR-A- 20110 053 368
- US-A1- 2010 101 428
- US-A1- 2017 127 872
- US-A1- 2018 141 746
- US-A1- 2019 075 959

## Description

### Field of the invention

The present invention relates to a machine for preparing a beverage from a capsule comprising a beverage ingredient, in particular the preparation of tea from tea leaves.

### Background of the invention

Single-serve beverage capsules are known in the art. These capsules are commonly used with beverage preparation machines for on demand dispensing of beverages, like coffee or tea.

For this, usually a beverage capsule with a capsule body that encloses a beverage ingredient is inserted in a capsule receiver of a beverage preparation machine. The capsule receiver is closed and the beverage preparation is started. In the capsule receiver, a top membrane of the capsule is punctured with a needle to inject a liquid, generally water, in the capsule to interact with the beverage ingredient inside the capsule to produce the desired beverage. The liquid fills the capsule so that the pressure inside the capsule increases. When a sufficient amount of liquid fills the capsule, a self-opening mechanism in the capsule is activated and opens a bottom membrane of the capsule to release the prepared beverage at a time when the extraction of the beverage component is completed. Examples of working principles of this type of container are described in WO 2003/059778 and EP3199071A1.

This type of capsule requires that the liquid provided by the machine presents a high pressure, usually of about 14 bar to enable the opening of the bottom membrane. Such a high liquid pressure is adapted to the preparation of beverage from roast and ground coffee or soluble beverage ingredients like powder milk, soluble coffee, soluble tea or chocolate. But this high pressure is not adapted for the preparation of tea from tea leaves stored I the capsule

In order to prepare tea from tea leaves with such a system of machine and capsule, it has been proposed in WO 2005/018395 to adapt the self-opening mechanism so that the bottom membrane opens at a lower pressure, in particular by providing a specific design of the pyramid plate and the internal membrane. Yet, in practice, the resulting tea beverage was not fully acceptable quality because the principle of the self-opening mechanism of the capsule opening did still require the building of a certain pressure inside the capsule. In fact, it is well-known that optimal extraction of tea leaves happens at atmospheric pressure all along the tea extraction.

An object of the invention is to address the above existing problems and to propose the preparation of tea from a capsule comprising tea leaves within a beverage preparation machine such as described in WO 2003/059778.

### Summary of the invention

The object is solved by the beverage preparation machine, the capsule holder and the system of Claims 1 to 13.

In the present application the terms "internal", "upper", "lateral", "front", "bottom" and "top" are used to describe the relational positioning of features of the invention. These terms should be understood to refer to the container in its normal orientation when positioned in a beverage preparation dispenser for the production of a beverage as shown in the figures.

### Brief description of the drawings

Specific embodiments of the invention are now described further, by way of example, with reference to the following drawings in which :
- Figure 1A is a view of a beverage machine according to the state of the art,
- Figure 1B is a schematic view of a capsule of the state of the art used in the machine of Figure 1A,
- Figures 2A and 2B are schematic views of the capsule holder in the receiving area of the machine of Figure 1 either in disconnected or in connected status,
- Figure 3 is a perspective view of the capsule holder according to the invention,
- Figures 4 is vertical cross section views of the capsule holder of Figure 3,
- Figure 5A is a perspective view of the body of a capsule usable in the system,
- Figure 5B is a perspective view of the front part of the capsule of Figure 5A
- Figure 5C corresponds to Figure 5B, the cover of the capsule being removed.
- Figures 6, 7 are vertical cross section views of the assembly of the liquid injection device of the machine and the capsule holder holding a capsule such as illustrated in Figures 5A-5C,
- Figures 8A, 8B illustrate the introduction and the removal of the capsule in and from the holder,
- Figure 9 is a vertical cross section view of an alternative capsule holder connected to the liquid injection device of the machine.

### Detailed description of exemplary embodiments

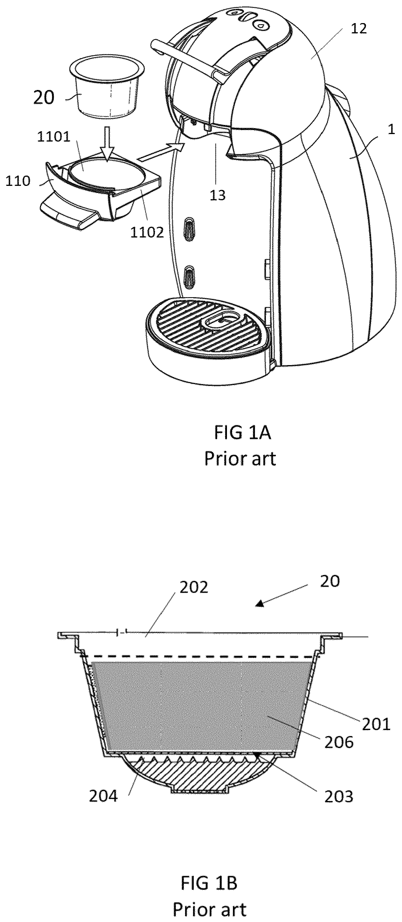

**Figures 1A and 1B** show a system of a beverage preparation machine 1 and a capsule 20 configured to prepare a beverage from said capsule according to the prior art. The machine 1 comprises a capsule holder 110 removeable from the machine configured to receive the capsule 20. The capsule holder comprises a receiving area 13 to introduce the body 201 of the capsule. Then the upper part 1102 of the capsule holder can be inserted in a receiving area 13 of the machine to prepare a beverage.

In this particular illustrated embodiment, the receiving area 13 of the machine and the upper part of the capsule holder are designed so that the lateral parts of the upper part 1102 are able to be slidably guided in the receiving area 13.

In addition, the machine comprises, above the receiving area 13 for the capsule holder, a liquid injection device 12 configured to be connected to the capsule holder and the capsule.

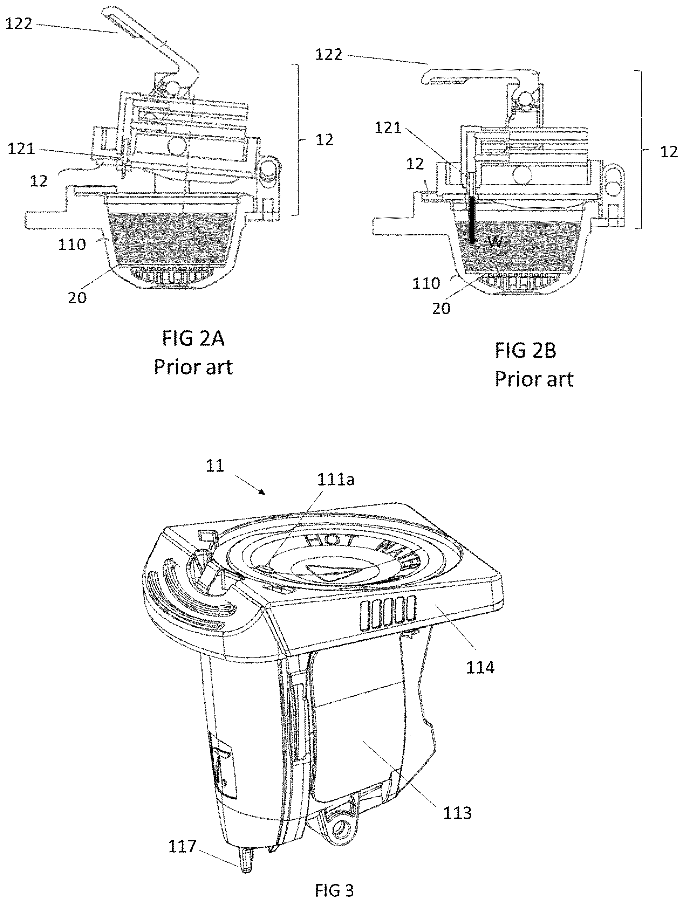

**Figures 2A and 2B** illustrate the capsule holder, the capsule and the liquid injection device 12 in two operations steps :
- in Figure 2A, the capsule holder is positioned in the receiving area 13 of the machine but it is not connected to the liquid injection device 12,
- in Figure 2B, the capsule holder is connected to the liquid injection device 12. In this operation, the actuating means 122 has been actuated so as to move the liquid injection device 12 to the inserted capsule holder and to simultaneously enclose the capsule in a brewing chamber formed by the liquid injection device and the capsule holder and to pierce the capsule top membrane 202 of the capsule.

This types of actuator can be such as described in WO 2008/107281 for example. The clamping means is configured to clamp the liquid injection device 12 against bearing edges of the capsule holder and/or edges of the capsule.

During this operation, the needle is oriented downwardly and the liquid is introduced downwardly as illustrated by the arrow W. A seal around the needle guarantees tightness with the membrane during liquid injection.

This system is particularly adapted to the preparation of a beverage under pressure due to the construction of the capsule as illustrated in Figure 1B comprising :
- a capsule body 201,
- a beverage ingredient 206 hold in a chamber ingredient defined between a top membrane 202 and a bottom membrane 203,
- an opening device 204 provided inside the body 201 of the capsule and below the bottom membrane 203 for opening this bottom membrane by relative engagement with this opening device under the effect of a rise in pressure of the injected liquid in the ingredient chamber. The machine 1 comprises a liquid supply system configured to provide the liquid injection device 12 with pressurised liquid. This liquid is usually water.

Usually, the liquid supply system can comprise :
- a liquid supply such as a liquid tank,
- pumping means to drive liquid form the liquid supply to the extraction device,
- heating and/or cooling means to adapt the temperature of the liquid before it is introduced inside the pod.

Generally, this liquid supply system is configured to provide the liquid injection device with pressurised liquid, preferably a liquid presenting a pressure above 10 bar.

Preferably, this beverage system of the prior art can correspond to the system described in WO 2003/059778 and the machine described WO 2008/107281.

In particular, this beverage system can correspond to the system commercialised by Nestlé under the trademark Nescafé Dolce Gusto.

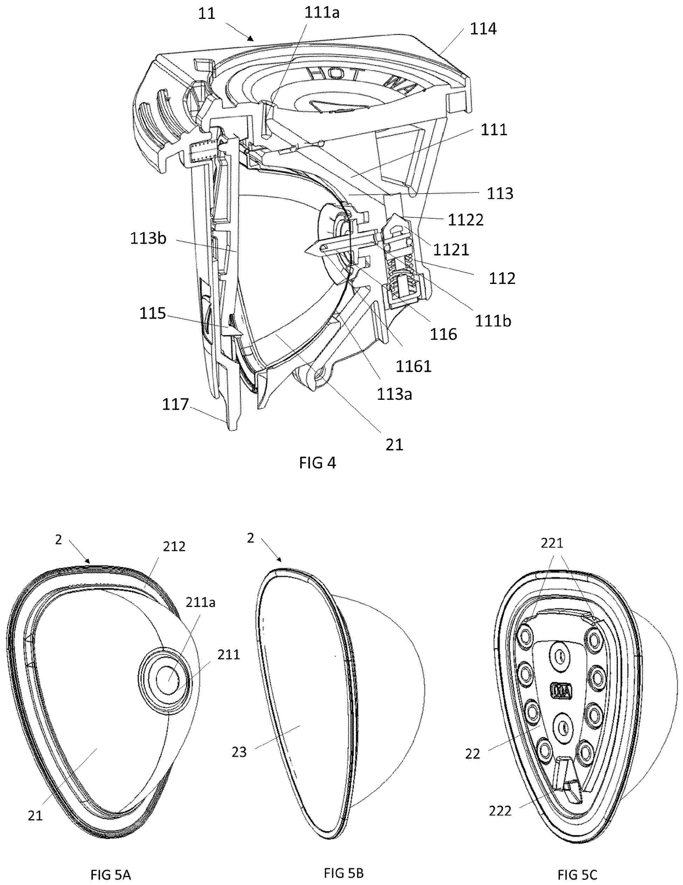

**Figures 3** **and** **4** illustrate a removable capsule holder 11 according to the invention that is different from the capsule holder of Figures 1A, 2A and 2B and that can be connected to the machine 1 and the liquid injection device 12 of Figure 2A, 2B in place of the capsule holder 110 of the state of the art.

In particular, this capsule holder 11 is designed to enclose a capsule 2 that is different from the capsule 20 of the prior art and that does not require the introduction of the liquid at high pressure inside the capsule during the beverage preparation. On the contrary, the beverage extraction is operated at ambient pressure inside the capsule 2. Such a pressure is particularly adapted to the preparation of tea from tea leaves as beverage ingredient.

This capsule holder 11 comprises an upper part 114 designed to cooperate with the capsule holder receiving area 13 of the machine 1. In the illustrated embodiment, the lateral parts 114a, 114b of said upper part present the same shape as the lateral parts of the capsule holder 110 of the prior art in order to be slidably guided in the receiving area 13 of the machine and to be able to be connected with the liquid injection device 12.

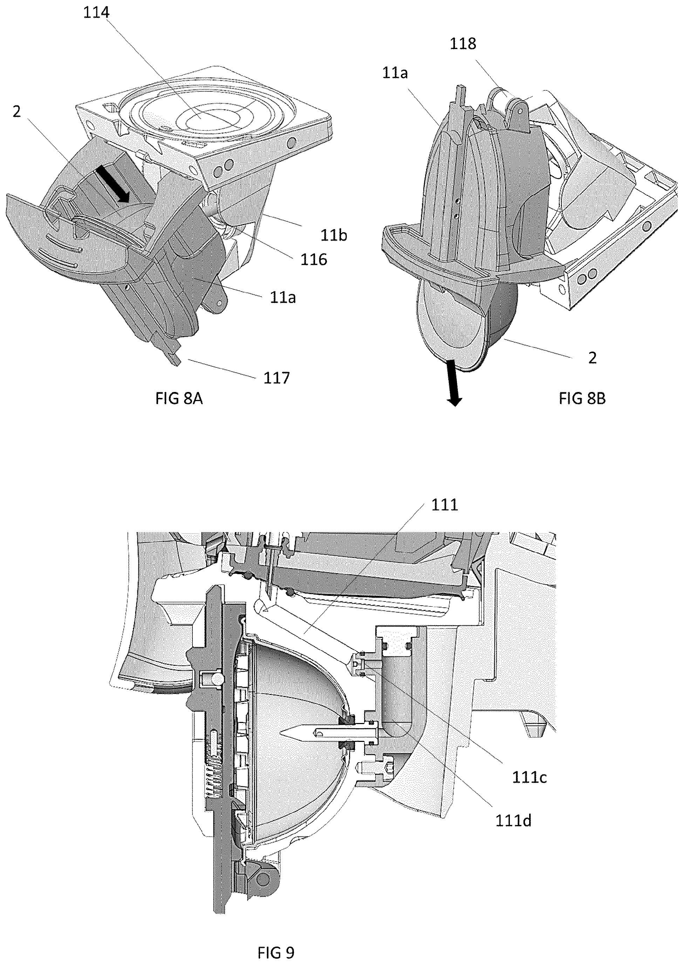

This capsule holder 11 comprises a chamber 113 for enclosing the capsule 2. This chamber is openable to introduce and remove the capsule (for example as illustrated in **Figures 8A, 8B**).

The upper part 114 of the capsule holder comprises a top plate 1141 provided with a liquid input opening 111a and configured to cooperate with the liquid injection needle 121 of the machine. The capsule holder 11 comprises an internal conduit 111 designed to drive pressurised liquid injected by the liquid injection needle 121 in this liquid input opening 111a to the capsule 2 hold in the chamber 113. This conduit 111 comprises a liquid pressure reducing means 112. Accordingly, the pressure of the liquid supplied by the injection device can be decreased before the liquid is supplied in the capsule hold in the chamber and optimal extraction of the beverage ingredient, such as tea leaves, can be obtained.

Preferably, the liquid pressure reducing means 112 is designed to get a pressure close to atmospheric pressure inside the chamber.

Preferably, this liquid pressure reducing means 112 can be a pressure reducing valve 112 oriented in the conduit 111 so as to be opened by the flow of pressurised liquid. The valve member 1121 can be spring loaded against the valve seat 1122 so that the pressure of the pressurised liquid reaches the required atmospheric pressure in the chamber.

Alternatively, as illustrated in **Figure 9****,** the liquid pressure reducing means 112 can be provided by the shape of the conduit 11 that can comprise a decompression chamber 111d. This decompression chamber is designed as a buffer chamber inside the conduit 111. Preferably, a cross section reduction 111c is provided in the conduit upstream said chamber.

Preferably, the holder 11 comprises a liquid injection needle 116 to inject the low pressure liquid supplied at the downstream side of the internal conduit in the capsule 20 that is enclosed in the chamber and, if necessary, to pierce a wall of the capsule.

Generally, the capsule 20 encloses the beverage ingredient in a tight manner in order to preserve shelf life of the ingredient against humidity and gas. Before liquid is introduced inside the capsule, the capsule is opened to atmosphere in order to enable extraction at ambient atmosphere.

The capsule can be opened by the user, for example by removing at least one tab covering premade opening(s), and/or the capsule can be opened by piercing a beverage outlet and/or a liquid inlet inside the walls of the capsule.

Preferably, the capsule holder 11 comprises means to pierce the capsule 2 before the liquid supply system provides the liquid injection device 12 with pressurised liquid :
- the capsule holder can comprise a second piercing means 115 to pierce a beverage outlet in the capsule, and
- the capsule holder can comprise a first piercing means 116 to pierce a liquid inlet in the capsule.

These piercing means guarantee that the beverage preparation occurs at atmospheric pressure.

Generally, such piercing means pierce the capsule when the user introduces the capsule 2 inside the capsules holder and encloses the capsule in the chamber 113 of the holder.

In the illustrated embodiment, the first piercing means is a hollow needle 116. The upstream input end of said hollow needle is connected to the outlet end 111b of the conduit of the capsule holder.

When the capsule presents the configuration such as described in below Figures 5A-5C with an overflow wall oriented vertically during beverage preparation, then preferably, the downstream opening 1161 of the hollow needle is designed to orientate liquid downwards to the lowermost part of the capsule hold in the capsule holder as described in EP 2080454.

In addition, when the capsule presents the configuration such as described in below Figures 5A-5C with this overflow wall, the second piercing means 115 can be present a hook-like shape to shear the cover 23 of the capsule against the shearing member 222 of the capsule as described in WO 2010/146101.

In addition, the capsule holder 11 can comprise a beverage guiding outlet 117 to guide the beverage dispensed from the capsule outlet to a drinking cup.

**Figures 5A-5C** illustrate capsules that can be used with the capsule holder of the present invention

The capsule comprises a capsule body or housing 21 defining an internal volume for storing beverage ingredients. Figure 5A shows the back side of said body. In the present capsule, back side refers to the side where liquid is introduced in the capsule, whereas the front side refers to the side the beverage is dispensed from. At said back side, the body 21 presents a liquid inlet hole 211. This hole is configured for cooperating with and enabling the passage of the first piercing member 116 of the holder. Preferably this hole is closed by a membrane 211a. This membrane is made of a material pierceable by the needle. It is usually an aluminium membrane.

Figure 5B shows the front side of the body. At said front side, the housing is closed by a front cover 23. The cover 23 is attached to a rim extending from the front opened side of the housing.

Preferably, at least a part of the cover is pierceable or tearable so that a beverage outlet can be created. The cover guarantees the freshness and the hygiene of beverage ingredient stored in the capsule.

Figure 5C corresponds to the capsule of Figure 5B wherein the cover 23 was removed. The capsule comprises a front wall 22 at the front face of the body. This front wall 22 comprises two beverage overflow holes 221. These overflow holes prevent the beverage from leaving the capsule too rapidly and before tea leaves have been sufficiently brewed.

The front wall 22 is usually positioned just under the front cover 23 of the capsule.

In a preferred mode, the front wall 22 can comprise a shearing member 222 on its front face, said shearing member being designed to tear the front cover 23 when the capsule is enclosed in the capsule holder further to the interaction of the shearing member with the second piercing means 115 of the holder. Usually, tearing happens during the movement of the chamber from the opened configuration to the closed configuration. Accordingly, a beverage outlet can be made in the front cover 23 when the capsule is enclosed in the holder. Such a shearing member is described in WO 2010/146101.

In one particular embodiment, the capsule can comprise a filter to prevent tea leaves from leaving the capsule. This filter covers at least the overflow holes 221. In a particular embodiment, the filter can extend along the whole surface of the front wall according to the teaching of WO 2007/042414.

Accordingly, when the capsule comprises tea leaves, a tea beverage of optimised quality and deprived of tea leaves fines is produced.

A similar capsule devoid of front cover 23 or wherein the cover was removed by the user before introduction inside the holder can be used too.

The above capsules are particularly designed for the production of tea from tea leaves, yet other types of capsule requiring beverage preparation at low pressure, close to atmospheric pressure, can be used with the system of the holder and the beverage machine according to the invention.

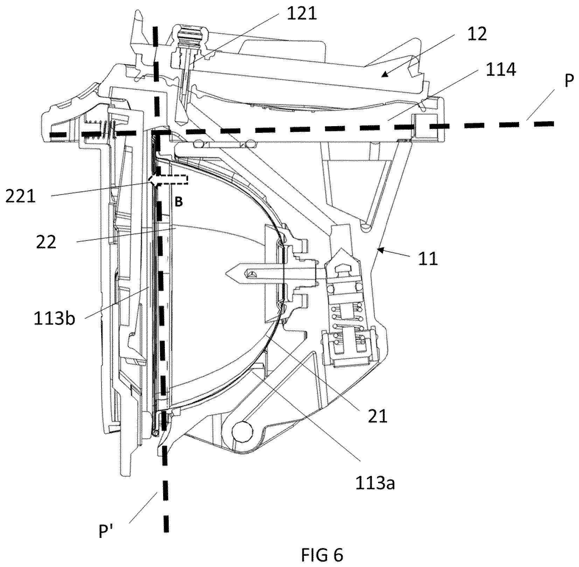

**Figure 6** illustrates the relative position of :
- a capsule comprising an overflow wall such as described in Figure 5A-5C inside the capsule holder according to the invention, and
- the liquid injection device 12 of the machine.

As illustrated in Figures 1A, 2A and 2B, the injection device 12 of the machine is provided with a liquid injection needle 121 that is oriented essentially vertically downwardly when the liquid injection device is connected to the capsule holder placed inside the machine.

The capsule holder 11 comprises :
- an upper part 114 extending essentially along a plane (P) in order
- a chamber 113 for enclosing the capsule 2, this capsule comprising a cup-shaped body 21 and a plane front overflow wall 22.

To enclose such a capsule, the chamber comprises a first part 113a that is cup shaped and a second part 113b that is essentially plane and extends along a plane P'.

In order to implement the overflow function of the front wall during the beverage preparation, the plane P' of the second part of the chamber is essentially perpendicular to the plane P of the upper part of the chamber when the chamber of the capsule holder is closed and the capsule holder is connected to the liquid injection device 12.

The correct orientation of the overflow holes 221 close to upper part 114 can be obtained by an asymmetric shape of the body 21 of the capsule and the corresponding conformal shape of the cup-shaped first part 113a of the chamber of the holder.

The internal shape of the holder guarantees the correct orientation of a capsule with overflow wall in this machine 1 that is not configured to receive such type of capsules and enables an optimal preparation of tea from tea leaves.

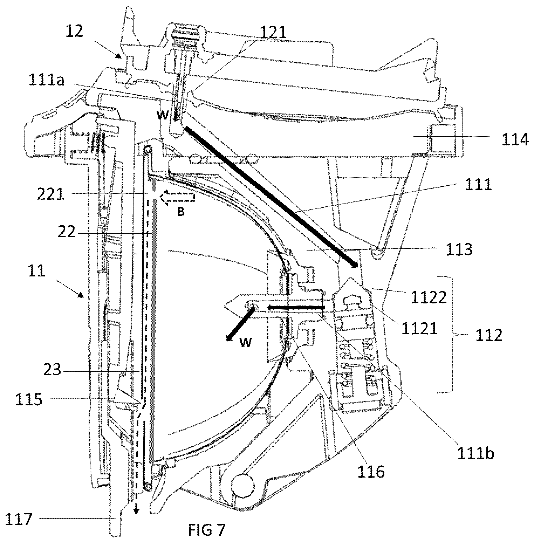

**Figure 7** is a vertical cross section views of the capsule holder of Figure 3 connected to the liquid injection device of the machine illustrating the path of liquid during beverage preparation when the capsule comprises an overflow wall 22 such as the capsule of Figures 5A-5C.

Liquid presenting a pressure above 10 bar is injected by the needle 121 of the liquid injection device of the machine inside the liquid input opening 111a of the capsule holder. Liquid follows the conduit 111 and pushes the pressure reducing valve 112 to enter the hollow needle 116 at a pressure close to atmospheric pressure. The hollow needle 116 is positioned inside the capsule 2 so that its end opening dispenses liquid inside the capsule downwardly. The liquid is directed to the bottom of the capsule where the beverage ingredients, preferably tea leaves, stand.

The flow of liquid is generally comprised between 150 and 180 ml/min. Liquid fills the capsule and produces the beverage, preferably tea, by contact with the beverage ingredient, preferably tea leaves. The beverage is able to flow through at least one opening 221 at the top of the overflow wall as illustrated by arrow B. This upper beverage outlet guarantees that tea leaves are sufficiently wetted and can sufficiently soak in the liquid before tea is dispensed from the capsule. A tea with improved quality is obtained.

Downstream the overflow opening 221, beverage is guided between the cover 23 and the wall 22 to the opening sheared in the cover by the piercing means 115 and then dispensed downwards out of the capsule holder along the guiding outlet 117 inside a drinking container positioned below.

As illustrated in Figure 7, preferably the pressure reducing valve 112 is positioned inside the conduit 111 as close as possible to the outlet end 111b of said conduit. This preferred position provides this valve 112 with an anti-backflow function and limits the volume of dead volume just upstream the outlet 111b which is critical when a beverage like tea from tea leaves is prepared from this capsule holder. In fact, any dead volume of fluid in a beverage preparation machine is disadvantageous due to safety and health issues. A dead volume can promote the development of bacteria, for example bacteria originating in and/or migrating into the dead volume from a used capsule, which has not yet been ejected or removed from the capsule holder.

Preferably, to limit even more the presence of dead volume, the pressure reducing valve 112 comprises a spring loaded valve member 1121 and the shape of this valve member is conformal to the shape of the valve seat 1122 designed by the conduit 111.

**Figures 8A, 8B** illustrate the introduction and the removal of the capsule in and from the holder 11 according to a particular embodiment. This capsule holder comprises two parts 11a, 11b movable one to the other between an opened position and a closed position.

These two parts are mobile or articulated or relation to the other between:
- an opened configuration or position where the capsule can be introduced or evacuated, and
- a closed configuration or position in which said two parts lie reciprocally in abutment. In this configuration, the two parts form the chamber 113 that encloses the capsule introduced in the holder.

In the specific embodiment, the two parts are attached one to attached one to the other by a hinge 118, yet, in other alternatives, these two parts can be fully detachable one from the other and assembled together to enclose a capsule previously positioned in one of the two parts.

Figures 8A illustrate the opened position where the two parts are distant one from the other and the capsule 2 has just been introduced in a receiving area of the first part 11a. This receiving area is designed to orientate the capsule correctly inside the chamber defined by the holder, in particular with the overflow hole 221 positioned closer to the upper plate 114 than to the beverage outlet 117, when a capsule such as described in Fig.5A-5C is used.

Then the two parts 11a, 11b can be moved tone to the other to enclose the capsule 2 inside the holder, which form the capsule chamber. During the closure operation, the capsule, that is held in the first part 11a, is pierced by the needle 116 rising from the second part 11b. If the capsule comprises a cover, said cover can be simultaneously torn or sheared by a second piercing means 115 to create the beverage outlet. Then, the upper part 114 of the closed holder can be introduced inside the receiving area of the machine and the beverage can be prepared.

After the preparation, the holder can be removed from the receiving area of machine and the two parts can be distanced one from the other again to remove the capsule 2. As illustrated in Figure 8B, by orienting the receiving area of the first part upside down, the capsule can be directly thrown away in a bin.

In the embodiment of Figures 8A, 8B, the two parts 11a, 11b are hinged to each other, but in alternative embodiments (not-shown) these parts can be removable and/or detachable from each others.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

### List of references in the drawings :

- machine: 1
- capsule holder: 11
- conduit: 111
- liquid input opening: 111a
- outlet: 111b
- cross section reduction: 111c
- decompression chamber: 111d
- pressure reducing valve: 112
- valve member: 1121
- valve seat: 1122
- chamber: 113
- cup shaped part: 113a
- plane part: 113b
- upper part: 114
- lateral parts: 114, 114b
- top plate: 1141
- second piercing means: 115
- hollow needle: 116
- downstream opening: 1161
- beverage guiding outlet: 117
- hinge: 118
- liquid injection device: 12
- needle: 121
- actuating means: 122
- capsule holder receiving area: 13
- cooperating means: 131
- capsule: 2
- capsule body: 21
- liquid inlet hole: 211
- membrane: 211a
- rim: 212
- front opened side: 213
- front wall: 22
- overflow hole: 221
- shearing member: 222
- cover: 23
- capsule prior art: 20
- capsule body: 201
- top membrane: 202
- bottom membrane: 203
- opening means: 204
- liquid distributor: 205
- beverage ingredient: 206
- outlet: 207
- capsule holder prior art: 110
- receiving area: 1101
- upper part: 1102

## Claims

1. Beverage preparation machine (1) for preparing a beverage from a beverage capsule (2), said machine comprising :
- a removable capsule holder (11) configured for receiving and holding the capsule (2) and comprising an upper part (14), and
- a capsule holder receiving area (13) for receiving the upper part (114) of the removable capsule holder (11), and
- a liquid injection device (12) connectable to the capsule holder when said capsule holder is inserted in the receiving area, said liquid injection device comprising :
. a liquid injection needle (121), and
. actuating means (122) configured to move the capsule holder and the liquid injection device relatively one to the other to enable the introduction of the liquid in the capsule, and
- a liquid supply system configured to provide the liquid injection device with pressurised liquid, preferably a liquid presenting a pressure above 10 bar,
wherein the removable capsule holder (11) comprises :
- a liquid input opening (111a) in the upper part (114) of said holder configured to cooperate with the liquid injection needle (121),
- a conduit (111) designed to drive pressurised liquid injected by the liquid injection needle (121) to the capsule (2) hold in the chamber (113), and
- a chamber (113) for enclosing the capsule (2), said chamber being :
. openable to introduce and remove the capsule in an opened position of the chamber, and
. closable to enclose the capsule in a closed position of the chamber,
**characterized in that** said conduit comprises a liquid pressure reducing means (112) and said removable capsule holder (11) further comprises at least one means to pierce the capsule (2) when the chamber (113) is in the closed position, so that the beverage preparation occurs at atmospheric pressure.

2. Beverage preparation machine according to the preceding claim, wherein the capsule holder (11) comprises :
- a first piercing means (116) to pierce a liquid inlet in the capsule, and
- a second piercing means (115) to pierce a beverage outlet in the capsule.
and wherein, in the closed position of the chamber, said first piercing means is configured to pierce a liquid inlet in the capsule and said second piercing means is configured to pierce a beverage outlet in the capsule.

3. Beverage preparation machine according to any one of Claims 1 to 2, wherein the first piercing means (116) is a hollow needle, and wherein the upstream input end of said hollow needle is connected to the outlet end (111b) of the conduit of the capsule holder.

4. Beverage preparation machine according to the preceding claim, wherein the downstream opening of the hollow needle is designed to orientate liquid downwards to the lowermost part of the capsule (2) hold in the capsule holder.

5. Beverage preparation machine according any one of claims 1 to 4, wherein a pressure reducing valve (112) is positioned inside the conduit (111).

6. Beverage preparation machine according to the precedent claim, wherein the conduit extends between the liquid input opening (111a) and an outlet end (111b) configured to cooperate with the capsule (1) and wherein the pressure reducing valve (112) is positioned inside the conduit (111) close to the outlet end (111b) of said conduit.

7. Beverage preparation machine according to any one of Claims 5 to 6, wherein the pressure reducing valve comprises a spring loaded valve member (1121) and the shape of the valve member is conformal to the shape of the valve seat (1122) designed by the conduit.

8. Beverage preparation machine according to any one of Claims 1 to 4, wherein the conduit (111) is designed to so as to comprise a decompression chamber (111d), and preferably a cross section reduction (111c) upstream said chamber.

9. Removable capsule holder configured to be used in a beverage preparation machine according to any one of Claims 1 to 8, wherein said capsule holder comprises :
- an upper part (114) extending essentially along a plane (P),
- a liquid input opening (111a) in the upper part (114) of said holder configured to cooperate with the liquid injection needle (121),
- a conduit (111) designed to drive pressurised liquid injected by the liquid injection needle (121) to the capsule (2) hold in the chamber (113), and
- a chamber (113) for enclosing the capsule (2), said chamber being :
. openable to receive and remove the capsule in an opened position of the chamber, and
. closable to enclose the capsule in a closed position of the chamber, , and
wherein the chamber comprises two parts, the first part (113a) being cup shaped and the second part being essentially plane (113b),
**characterized in that** said conduit comprises a liquid pressure reducing means (112) and said removable capsule holder (11) further comprises at least one means to pierce the capsule (2) when the chamber (113) is in the closed position, so that the beverage preparation occurs at atmospheric pressure,
wherein the cup-shaped first part (113a) comprises a first piercing means (115) to pierce a liquid inlet in the capsule in the closed position of the chamber, and
wherein the plane second part (113b) comprises a second piercing means (116) to pierce a beverage outlet in the capsule in the closed position of the chamber.

10. Use of a holder according to the precedent claim in a beverage machine according to any one of claims 1 to 8.

11. System of a beverage preparation machine according to any one of Claims 1 to 8 and a beverage capsule (2), said capsule comprising :
- a capsule body (21) containing one or more beverage ingredients, preferably tea leaves, said body presenting a front opened side (113), and
- a front wall (22) extending at the front opened side, said front wall comprising at least one beverage overflow hole (221),
wherein, in the removable capsule holder, the chamber (113) and the upper part (114) received in the receiving area of the capsule holder (11) are designed to orientate the front wall (22) of the capsule vertically and the beverage overflow hole (221) close to the upper part (114), when said upper part (114) of the capsule holder is hold in the receiving area.

12. System according to the precedent claim, wherein the front wall (22) of the capsule is covered by a cover (23).

13. System according to the precedent claim, wherein the front wall (22) of the capsule comprises a shearing member (222) configured to interact with a piercing means (115) of the capsule holder, preferably when the chamber is moved from the opened position to the closed position.

## Patentansprüche

1. Getränkezubereitungsmaschine (1) zum Zubereiten eines Getränks aus einer Getränkekapsel (2), die Maschine umfassend:
- einen entfernbaren Kapselhalter (11), der zum Aufnehmen und Halten der Kapsel (2) konfiguriert ist und einen oberen Teil (14) umfasst, und
- einen Kapselhalteraufnahmebereich (13) zum Aufnehmen des oberen Teils (114) des entfernbaren Kapselhalters (11), und
- eine Flüssigkeitseinspritzvorrichtung (12), die mit dem Kapselhalter verbindbar ist, wenn der Kapselhalter in den Aufnahmebereich eingesetzt ist, die Flüssigkeitseinspritzvorrichtung umfassend:
· eine Flüssigkeitseinspritznadel (121), und
· Betätigungsmittel (122), die konfiguriert sind, um den Kapselhalter und die Flüssigkeitseinspritzvorrichtung relativ zueinander zu bewegen, um die Einfüllung der Flüssigkeit in die Kapsel zu ermöglichen, und
- ein Flüssigkeitsversorgungssystem, das konfiguriert ist, um der Flüssigkeitseinspritzvorrichtung unter Druck stehende Flüssigkeit bereitzustellen, vorzugsweise eine Flüssigkeit, die einen Druck über 10 bar vorweist,
wobei der entfernbare Kapselhalter (11) umfasst:
- eine Flüssigkeitszufuhröffnung (111a) in dem oberen Teil (114) des Halters, die konfiguriert ist, um mit der Flüssigkeitseinspritznadel (121) zusammenzuwirken,
- eine Leitung (111), die gestaltet ist, um unter Druck stehende Flüssigkeit, die durch die Flüssigkeitseinspritznadel (121) eingespritzt wird, zu der Kapsel (2) zu leiten, die in der Kammer (113) gehalten wird, und
- eine Kammer (113) zum Umschließen der Kapsel (2), wobei die Kammer:
· öffnungsfähig ist, um die Kapsel in einer geöffneten Position der Kammer einzufüllen und zu entfernen, und
· verschließbar ist, um die Kapsel in einer geschlossenen Position der Kammer zu umschließen,
**dadurch gekennzeichnet, dass** die Leitung ein flüssigkeitsdruckminderndes Mittel (112) umfasst und der entfernbare Kapselhalter (11) ferner mindestens ein Mittel umfasst, um die Kapsel (2) zu durchstechen, wenn die Kammer (113) in der geschlossenen Position ist, sodass die Getränkezubereitung bei atmosphärischem Druck erfolgt.

2. Getränkezubereitungsmaschine nach dem vorstehenden Anspruch, wobei der Kapselhalter (11) umfasst:
- ein erstes Durchstechmittel (116), um einen Flüssigkeitseinlass in der Kapsel zu durchstechen, und
- ein zweites Durchstechmittel (115), um einen Getränkeauslass in der Kapsel zu durchstechen.
und wobei, in der geschlossenen Position der Kammer, das erste Durchstechmittel konfiguriert ist, um einen Flüssigkeitseinlass in der Kapsel zu durchstechen, und das zweite Durchstechmittel konfiguriert ist, um einen Getränkeauslass in der Kapsel zu durchstechen.

3. Getränkezubereitungsmaschine nach einem der Ansprüche 1 bis 2, wobei das erste Durchstechmittel (116) eine Hohlnadel ist, und wobei das stromaufwärtige Zufuhrende der Hohlnadel mit dem Auslassende (111b) der Leitung des Kapselhalters verbunden ist.

4. Getränkezubereitungsmaschine nach dem vorstehenden Anspruch, wobei die stromabwärtige Öffnung der Hohlnadel gestaltet ist, um Flüssigkeit nach unten zu dem untersten Teil der Kapsel (2) auszurichten, die in dem Kapselhalter gehalten wird.

5. Getränkezubereitungsmaschine nach einem der Ansprüche 1 bis 4, wobei in der Leitung (111) ein Druckminderventil (112) positioniert ist.

6. Getränkezubereitungsmaschine nach dem vorstehenden Anspruch, wobei sich die Leitung zwischen der Flüssigkeitszufuhröffnung (111a) und einem Auslassende (111b) erstreckt, das konfiguriert ist, um mit der Kapsel (1) zusammenzuwirken, und wobei das Druckminderventil (112) in der Leitung (111) nahe dem Auslassende (111b) der Leitung positioniert ist.

7. Getränkezubereitungsmaschine nach einem der Ansprüche 5 bis 6, wobei das Druckminderventil ein federbelastetes Ventilelement (1121) umfasst und die Form des Ventilelements der Form des Ventilsitzes (1122) entspricht, die durch die Leitung gestaltet ist.

8. Getränkezubereitungsmaschine nach einem der Ansprüche 1 bis 4, wobei die Leitung (111) gestaltet ist, um eine Dekompressionskammer (111d) und vorzugsweise eine Querschnittsminderung (111c) stromaufwärtig der Kammer zu umfassen.

9. Entfernbarer Kapselhalter, der konfiguriert ist, um in einer Getränkezubereitungsmaschine nach einem der Ansprüche 1 bis 8 verwendet zu werden, wobei der Kapselhalter umfasst:
- einen oberen Teil (114), der sich im Wesentlichen entlang einer Ebene (P) erstreckt,
- eine Flüssigkeitszufuhröffnung (111a) in dem oberen Teil (114) des Halters, die konfiguriert ist, um mit der Flüssigkeitseinspritznadel (121) zusammenzuwirken,
- eine Leitung (111), die gestaltet ist, um unter Druck stehende Flüssigkeit, die durch die Flüssigkeitseinspritznadel (121) eingespritzt wird, zu der Kapsel (2) zu leiten, die in der Kammer (113) gehalten wird, und
- eine Kammer (113) zum Umschließen der Kapsel (2), wobei die Kammer:
· öffnungsfähig ist, um die Kapsel in einer geöffneten Position der Kammer aufzunehmen und zu entfernen, und
· verschließbar ist, um die Kapsel in einer geschlossenen Position der Kammer zu umschließen, und
wobei die Kammer zwei Teile umfasst, wobei der erste Teil (113a) becherförmig ist und der zweite Teil im Wesentlichen eben (113b) ist,
**dadurch gekennzeichnet, dass** die Leitung ein flüssigkeitsdruckminderndes Mittel (112) umfasst und der entfernbare Kapselhalter (11) ferner mindestens ein Mittel umfasst, um die Kapsel (2) zu durchstechen, wenn die Kammer (113) in der geschlossenen Position ist, sodass die Getränkezubereitung bei atmosphärischem Druck erfolgt,
wobei der becherförmige erste Teil (113a) ein erstes Durchstechmittel (115) umfasst, um in der geschlossenen Position der Kammer einen Flüssigkeitseinlass in der Kapsel zu durchstechen, und
wobei der ebene zweite Teil (113b) ein zweites Durchstechmittel (116) umfasst, um in der geschlossenen Position der Kammer einen Getränkeauslass in der Kapsel zu durchstechen.

10. Verwendung eines Halters nach dem vorstehenden Anspruch in einer Getränkemaschine nach einem der Ansprüche 1 bis 8.

11. System aus einer Getränkezubereitungsmaschine nach einem der Ansprüche 1 bis 8 und einer Getränkekapsel (2), die Kapsel umfassend:
- einen Kapselkörper (21), der einen oder mehrere Getränkeinhaltsstoffe enthält, vorzugsweise Teeblätter, wobei der Körper eine geöffnete Vorderseite (113) vorweist, und
- eine Vorderwand (22), die sich an der geöffneten Vorderseite erstreckt, die Vorderwand umfassend mindestens ein Getränkeüberlaufloch (221),
wobei, in dem entfernbaren Kapselhalter, die Kammer (113) und der obere Teil (114), der in dem Aufnahmebereich des Kapselhalters (11) aufgenommen wird, gestaltet sind, um die Vorderwand (22) der Kapsel vertikal und das Getränkeüberlaufloch (221) nahe dem oberen Teil (114) auszurichten, wenn der obere Teil (114) des Kapselhalters in dem Aufnahmebereich gehalten wird.

12. System nach dem vorstehenden Anspruch, wobei die Vorderwand (22) der Kapsel durch eine Abdeckung (23) abgedeckt ist.

13. System nach dem vorstehenden Anspruch, wobei die Vorderwand (22) der Kapsel ein Scherelement (222) umfasst, das konfiguriert ist, um mit einem Durchstechmittel (115) des Kapselhalters zu interagieren, vorzugsweise wenn die Kammer von der geöffneten Position in die geschlossene Position bewegt wird.

## Revendications

1. Machine de préparation de boissons (1) permettant de préparer une boisson à partir d'une capsule pour boisson (2), ladite machine comprenant :
- un support de capsule amovible (11) conçu pour recevoir et supporter la capsule (2) et comprenant une partie supérieure (14), et
- une zone de réception de support de capsule (13) permettant de recevoir la partie supérieure (114) du support de capsule amovible (11), et
- un dispositif d'injection de liquide (12) pouvant être relié au support de capsule, lorsque ledit support de capsule est inséré dans la zone de réception, ledit dispositif d'injection de liquide comprenant :
· une aiguille d'injection de liquide (121), et
· un moyen d'actionnement (122) conçu pour déplacer le support de capsule et le dispositif d'injection de liquide l'un par rapport à l'autre afin de permettre l'introduction du liquide dans la capsule, et
- un système d'alimentation en liquide conçu pour fournir, au dispositif d'injection de liquide, un liquide sous pression, de préférence, un liquide présentant une pression supérieure à 10 bar,
dans laquelle le support de capsule amovible (11) comprend :
- une ouverture d'entrée de liquide (111a) dans la partie supérieure (114) dudit support conçue pour coopérer avec l'aiguille d'injection de liquide (121),
- un conduit (111) conçu pour entraîner du liquide sous pression injecté par l'aiguille d'injection de liquide (121) jusqu'à la capsule (2) supportée dans la chambre (113), et
- une chambre (113) permettant d'envelopper la capsule (2), ladite chambre pouvant :
· être ouverte pour introduire et retirer la capsule dans une position ouverte de la chambre, et
· être fermée pour envelopper la capsule dans une position fermée de la chambre,
**caractérisée en ce que** ledit conduit comprend un moyen de réduction de pression de liquide (112) et ledit support de capsule amovible (11) comprend en outre au moins un moyen de perforer la capsule (2) lorsque la chambre (113) est en position fermée, de sorte que la préparation de boissons s'effectue à la pression atmosphérique.

2. Machine de préparation de boissons selon la revendication précédente, dans laquelle le support de capsule (11) comprend :
- un premier moyen de perforation (116) pour perforer une entrée de liquide dans la capsule, et
- un second moyen de perforation (115) pour perforer une sortie de boisson dans la capsule,
et dans laquelle, en position fermée de la chambre, ledit premier moyen de perforation est conçu pour perforer une entrée de liquide dans la capsule et ledit second moyen de perforation est conçu pour perforer une sortie de boisson dans la capsule.

3. Machine de préparation de boissons selon l'une quelconque des revendications 1 à 2, dans laquelle le premier moyen de perforation (116) est une aiguille creuse, et dans laquelle l'extrémité d'entrée en amont de ladite aiguille creuse est reliée à l'extrémité de sortie (111b) du conduit du support de capsule.

4. Machine de préparation de boissons selon la revendication précédente, dans laquelle l'ouverture en aval de l'aiguille creuse est conçue pour orienter du liquide vers le bas, vers la partie la plus basse de la capsule (2) supportée dans le support de capsule.

5. Machine de préparation de boissons selon l'une quelconque des revendications 1 à 4, dans laquelle un réducteur de pression (112) est positionné à l'intérieur du conduit (111).

6. Machine de préparation de boissons selon la revendication précédente, dans laquelle le conduit s'étend entre l'ouverture d'entrée de liquide (111a) et une extrémité de sortie (111b) conçue pour coopérer avec la capsule (1) et dans laquelle le réducteur de pression (112) est positionné à l'intérieur du conduit (111) près de l'extrémité de sortie (111b) dudit conduit.

7. Machine de préparation de boissons selon l'une quelconque des revendications 5 à 6, dans laquelle le réducteur de pression comprend un élément de soupape à ressort (1121) et la forme de l'élément de soupape est conforme à la forme du siège de soupape (1122) conçu par le conduit.

8. Machine de préparation de boissons selon l'une quelconque des revendications 1 à 4, dans laquelle le conduit (111) est conçu de manière à comprendre une chambre de décompression (111d), et de préférence une réduction de section transversale (111c) en amont de ladite chambre.

9. Support de capsule amovible conçu pour être utilisé dans une machine de préparation de boissons selon l'une quelconque des revendications 1 à 8, dans lequel ledit support de capsule comprend :
- une partie supérieure (114) s'étendant essentiellement le long d'un plan (P),
- une ouverture d'entrée de liquide (111a) dans la partie supérieure (114) dudit support conçue pour coopérer avec l'aiguille d'injection de liquide (121),
- un conduit (111) conçu pour entraîner du liquide sous pression injecté par l'aiguille d'injection de liquide (121) jusqu'à la capsule (2) supportée dans la chambre (113), et
- une chambre (113) permettant d'envelopper la capsule (2), ladite chambre pouvant :
· être ouverte pour recevoir et retirer la capsule dans une position ouverte de la chambre, et
· être fermée pour envelopper la capsule dans une position fermée de la chambre, et
dans lequel la chambre comprend deux parties, la première partie (113a) étant en forme de coupelle et la seconde partie étant essentiellement plane (113b),
**caractérisé en ce que** ledit conduit comprend un moyen de réduction de pression de liquide (112) et ledit support de capsule amovible (11) comprend en outre au moins un moyen de perforer la capsule (2) lorsque la chambre (113) est en position fermée, de sorte que la préparation de boissons s'effectue à la pression atmosphérique,
dans lequel la première partie en forme de coupelle (113a) comprend un premier moyen de perforation (115) pour perforer une entrée de liquide dans la capsule en position fermée de la chambre, et
dans lequel la seconde partie plane (113b) comprend un second moyen de perforation (116) pour perforer une sortie de boisson dans la capsule en position fermée de la chambre.

10. Utilisation d'un support selon la revendication précédente dans une machine à boissons selon l'une quelconque des revendications 1 à 8.

11. Système d'une machine de préparation de boissons selon l'une quelconque des revendications 1 à 8 et d'une capsule de boisson (2), ladite capsule comprenant :
- un corps de capsule (21) contenant un ou plusieurs ingrédients de boisson, de préférence, des feuilles de thé, ledit corps présentant un côté avant ouvert (113), et
- une paroi avant (22) s'étendant au niveau du côté ouvert avant, ladite paroi frontale comprenant au moins un orifice de débordement de boisson (221),
dans lequel, dans le support de capsule amovible, la chambre (113) et la partie supérieure (114) reçue dans la zone de réception du support de capsule (11) sont conçues pour orienter la paroi avant (22) de la capsule verticalement et l'orifice de débordement de boisson (221) à proximité de la partie supérieure (114), lorsque ladite partie supérieure (114) du support de capsule est supportée dans la zone de réception.

12. Système selon la revendication précédente, dans lequel la paroi avant (22) de la capsule est recouverte d'un couvercle (23).

13. Système selon la revendication précédente, dans lequel la paroi avant (22) de la capsule comprend un élément de cisaillement (222) conçu pour interagir avec un moyen de perforation (115) du support de capsule, de préférence lorsque la chambre est déplacée de la position ouverte à la position fermée.
